# EUROPÄISCHE PATENTSCHRIFT

(11) **EP 2 803 509 B1**
(45) Veröffentlichungstag und Bekanntmachung des Hinweises auf die Patenterteilung: **03.02.2016**
(21) Anmeldenummer: 14001590.0
(22) Anmeldetag: 06.05.2014
(51) Int. Cl.: B60D 1/48

(54) **Trägeranordnung für eine Anhängekupplung oder einen Lastenträger mit Steckzapfen**
Carrier assembly for a trailer coupling or a load bearer with positioning pin
Agencement de support pour un attelage ou un support de charge doté d'un broche

(30) Priorität: 08.05.2013 DE 102013008323
(43) Veröffentlichungstag der Anmeldung: 19.11.2014
(73) Patentinhaber: WESTFALIA - Automotive GmbH, 33378 Rheda-Wiedenbrück (DE)
(72) Erfinder: Angermann, Kay, 04720 Döbeln (DE)
(74) Vertreter: Patentanwälte Bregenzer und Reule Partnerschaftsgesellschaft mbB

(56) Entgegenhaltungen:
- EP-A1- 0 014 287
- WO-A1-2009/108155
- DE-A1-102007 060 481
- DE-A1-102009 041 886
- DE-U1- 29 702 147

## Beschreibung

Die Erfindung betrifft eine Trägeranordnung für eine Anhängekupplung oder einen Lastenträger, als Bauteile umfassend einen Querträger und gegebenenfalls mit dem Querträger verbundene Seitenträger zur Montage an einem Heck einer Karosserie eines Fahrzeugs sowie mindestens eine an dem Querträger angeordnete Halterung für eine Anhängekupplung oder für ein Kupplungsteil eines Lastenträgers, wobei mindestens zwei Bauteile oder Bauteilkomponenten der Trägeranordnung mit Kontaktflächen aneinander anliegen.

In der nicht vorveröffentlichten deutschen Patentanmeldung DE 10 2011 122 468.1 ist beschrieben, einen Querträger mit Seitenträgern anhand von Biegeelementen zu verbinden. Die Herstellung von Biegeelemente ist jedoch in manchen Fällen schwierig, insbesondere müssen die Biegeelemente mehrfach umgekantet werden.

Davon ausgehend ist es die Aufgabe der vorliegenden Erfindung, eine verbesserte Verbindung von Bauteilen einer Trägeranordnung zu schaffen.

Zur Lösung der Aufgabe ist bei einer Trägeranordnung der eingangs genannten Art vorgesehen, dass vor die Kontaktfläche des einen Bauteils oder der einen Bauteilkomponente mindestens ein als Steckzapfen ausgestalteter Steckvorsprung vorsteht, der in mindestens eine als Zapfenaufnahme ausgestaltete Steckaufnahme an der Kontaktfläche des anderen Bauteils oder der anderen Bauteilkomponente entlang einer Steckachse einsteckbar ist und in die Steckaufnahme eingreift, so dass quer zu der Kontaktfläche erstreckende seitliche Widerlagerflächen des Steckvorsprungs und der Steckaufnahme im Eingriff sind.

Es ist ein Grundgedanke der vorliegenden Erfindung, dass anhand eines beispielsweise in der Art eines Nockens oder einer vorstehenden Nase ausgestalteten Steckzapfens, der in eine korrespondierende Zapfenaufnahme, also beispielsweise in eine Mulde, ein Sackloch oder dergleichen, eingreift, eine drehfeste, eine Scherbewegung quer zu der Steckachse unterbindende oder zumindest verringernde Verbindung zwischen den miteinander zu verbindenden Bauteilen geschaffen wird.

Bei den Bauteilen handelt es sich beispielsweise um einen Querträger, der mit Seitenträgern verbunden wird oder aber auch um eine Halterung für eine Anhängekupplung oder einen Lastenträger, der auf die erfindungsgemäße Weise sozusagen mit dem Querträger verzapft wird. Dadurch ist eine feste, formschlüssige Verbindung zwischen den jeweiligen Bauteilen gegeben.

Es können also beispielsweise die Seitenträger mit dem Querträger erfindungsgemäß verbunden sein. Es ist aber auch möglich, dass beispielsweise der Querträger oder die Seitenträger mehrteilig sind, also Bauteilkomponenten, zum Beispiel Profilkörperabschnitte, aufweisen, die auf die erfindungsgemäße Weise miteinander verbunden werden. In der nachfolgenden Beschreibung wird zwar das Wort "Bauteil" verwendet, wobei die Erläuterungen sinngemäß aber auch für die Verbindung zwischen Bauteilkomponenten gelten.

Der mindestens eine Steckvorsprung ist beispielsweise an dem Querträger angeordnet und dient zur Verbindung mit dem Seitenträger oder der Halterung. Der mindestens eine Steckvorsprung kann aber auch am Seitenträger angeordnet sein und vor diesen zum Querträger hin vorstehen.

Es ist auch möglich, dass beispielsweise die Halterung für die Anhängekupplung oder das Kupplungsteil des Lastenträgers anhand einer oder mehrerer Steckvorsprünge mit beispielsweise dem Querträger verbunden ist. Weiterhin kann auch der Seitenträger oder der Querträger mehrteilig sein und anhand einer erfindungsgemäßen Steckverbindung verbunden bzw. verzapft sein.

An dieser Stelle sei bemerkt, dass selbstverständlich eine Verbindung zwischen zwei Bauteilen der erfindungsgemäßen Trägeranordnung auch andere Verbindungskomponenten, zum Beispiel Biegelaschen, Schrauben, Schweißverbindungen oder dergleichen umfassen kann.

Bei der nachfolgenden Beschreibung werden jeweils ein Steckvorsprung und eine Steckaufnahme erläutert. Selbstverständlich ist es vorteilhaft, wenn die erfindungsgemäße Steckverbindung mehrfach vorhanden ist, das heißt dass die Bauteile mit mehreren erfindungsgemäßen Steckverbindungen miteinander verbunden sind. Beispielsweise ist es vorteilhaft, wenn mindestens zwei erfindungsgemäße Steckvorsprünge und zwei Steckaufnahmen nebeneinander vorgesehen sind, so dass die Steckverbindung sozusagen paarweise vorhanden ist. Dabei ist es möglich, dass beide Bauteile beispielsweise jeweils einen Steckvorsprung und eine Steckaufnahme aufweisen oder dass die Steckvorsprünge am einen Bauteil und die Steckaufnahmen am anderen Bauteil vorgesehen sind.

Die mindestens eine Steckaufnahme und/oder der mindestens eine Steckvorsprung kann beispielsweise einen zylindrischen, beispielsweise kreiszylindrischen Innenumfang bzw. Außenumfang aufweisen. Die Innenumfangskontur oder die Außenumfangskontur bilden jeweils Bestandteile der jeweiligen Widerlagerfläche. Selbstverständlich sind auch andere Zylinder möglich als ein Kreiszylinder, beispielsweise dass eine im Querschnitt polygonale, zum Beispiel rechteckige, Grundkontur oder ein entsprechender Querschnitt des Steckvorsprungs oder der Steckaufnahme vorhanden ist.

Es ist möglich, dass die Querschnittskontur des Steckvorsprungs oder der Steckaufnahme kontinuierlich zylindrisch, zum Beispiel kreiszylindrisch, ist. Es kann aber auch nur ein Abschnitt des Steckvorsprungs oder der Steckaufnahme zylindrisch sein, während ein anderer Abschnitt des Außenumfangs des Steckvorsprungs oder des Innenumfangs der Steckaufnahme einen schrägen oder konischen Verlauf hat.

Eine Variante der Erfindung sieht vor, dass mindestens eine Widerlagerfläche der mindestens einen Steckaufnahme und oder des mindestens einen Steckvorsprungs eine Neigung schräg zu der Steckachse aufweist, beispielsweise konisch verläuft. Bevorzugt ist es, wenn mindestens eine Widerlagerfläche nicht rechtwinkelig schräg zu der Kontaktfläche verläuft. Die Widerlagerfläche ist beispielsweise an einem sich nicht rechtwinkelig schräg zu der Kontaktfläche erstreckenden, beispielsweise konischen oder flach schräg geneigten Seitenwandabschnitt des mindestens einen Steckvorsprungs oder der Steckaufnahme gebildet.

Die Widerlagerfläche des Steckvorsprungs oder der Steckaufnahme wird zweckmäßigerweise von einem Wandabschnitt gebildet, der winkelig, beispielsweise rechtwinkelig oder schräg, von einer den Kontaktbereich mit dem benachbarten Bauteil bereitstellenden Wand absteht. Eine Dicke dieser Wand und des Wandabschnitts des Steckvorsprungs und der Steckaufnahme ist zweckmäßigerweise gleich oder zumindest etwa gleich.

Zweckmäßigerweise ist vorgesehen, dass eine sich in Richtung der Steckachse erstreckende Einstecklänge des mindestens einen Steckvorsprungs und/oder der mindestens einen Steckaufnahme kleiner als ein sich quer zur Steckachse erstreckender Durchmesser des Steckvorsprungs oder der Steckaufnahme ist. Mit anderen Worten sind also der Steckvorsprung und die Steckaufnahme relativ wenig tief, haben jedoch einen großen Durchmesser, beispielsweise eine große Querlänge oder Querbreite.

Der mindestens eine Steckvorsprung und die den Steckvorsprung aufnehmende Steckaufnahmen sind vorzugsweise stoffschlüssig miteinander verbunden. Anstelle oder in Ergänzung der stoffschlüssigen Verbindung ist eine Verbindung anhand mindestens eines mechanischen Formschlusselements, zum Beispiel einer Schraube oder eines Niets, ebenfalls vorteilhaft. Beispielsweise ist der Steckvorsprung zusätzlich geklebt, geschweißt oder dergleichen. Auch eine Lötverbindung, insbesondere eine Hartlötverbindung, ist ohne weiteres vorteilhaft. Bei den Schweißverbindungen ist es beispielsweise möglich, dass der Steckvorsprung mittels eines Widerstandsschweißens, z.B. Punktschweißens, mit dem anderen Bauteil verbunden ist. Aber auch eine Verschweißung mit Schweißzusatzwerkstoffen, z.B. Material eines Schweißdrahts, ist vorteilhaft. Auch Stanznieten oder Clinchen sind zweckmäßig.

Die mindestens eine Steckaufnahme hat vorzugsweise einen Boden. Mithin ist also die Steckaufnahme beispielsweise als eine Art Sackloch ausgestaltet. Auch bei dem Steckvorsprung ist es vorteilhaft, wenn er an seinem freien Ende eine Stirnfläche oder Stirnwand aufweist. Mithin hat also die Steckaufnahme und der Steckvorsprung quer zur Steckrichtung eine relativ große Ausdehnung bzw. Stirnfläche oder Stirnwand und Bodenfläche, die sich in günstiger Weise zur zusätzlichen Verbindung mit beispielsweise Klebstoff, Schweißmaterial oder dergleichen eignet.

Es ist auch möglich, dass beispielsweise die Steckaufnahme keinen Boden hat, während der Steckvorsprung eine frontale, sich winkelig zu seinen Umfangswänden oder Umfangsflächen erstreckende Stirnfläche oder Stirnwand hat. Auch umgekehrt ist es denkbar, dass beispielsweise die Steckaufnahme oder Zapfenaufnahme zwar einen Boden hat, der Steckvorsprung oder Steckzapfen hingegen frontseitig keine oder jedenfalls eine nur beispielsweise durch die Schmalseiten seiner Umfangswände gebildete Stirnfläche oder Stirnwand hat.

Der Boden stellt zweckmäßigerweise eine Stützfläche bereit, an der sich der Steckvorsprung oder Steckzapfen mit seiner frontalen Stirnfläche oder Stirnwand abstützt. Zweckmäßig ist es auch, wenn der Boden der Steckaufnahme und die frontale Stirnfläche oder Stirnwand oder der Kopf des Steckvorsprungs von einem Formschlusselement, zum Beispiel einer Schraube oder eines Niets oder beidem durchsetzt ist. Somit ist also eine in Steckrichtung zugfeste Verbindung gegeben. Selbstverständlich eignet sich der Boden auch dazu, dass die frontale Stirnfläche oder Stirnwand des Steckvorsprungs stoffschlüssig gehalten wird, was auch eine bezüglich der Steckrichtung zugfeste Verbindung schafft.

Der mindestens eine Steckvorsprung ist zweckmäßigerweise an seiner seinem freien Kopfende entgegengesetzten Seite mit einer Vertiefung versehen oder weist dort eine Vertiefung auf, die sich zur Aufnahme eines Kopfes oder einem Niet eignet. Die Vertiefung weist zweckmäßigerweise eine solche Tiefe auf, dass der Kopf des Niets oder der Schraube nicht vor eine sich neben der Vertiefung erstreckende Fläche des Bauteils, beispielsweise eine zu der Kontaktfläche des Bauteils entgegengesetzte Fläche, vorsteht.

Die Vertiefung wird beispielsweise dadurch gebildet, dass der Steckvorsprung anhand einer Umformung, eines Tiefziehens oder eines Prägens gebildet wird, wobei der Steckvorsprung oder Zapfenvorsprung aus einem insbesondere plattenförmigen Grundkörper des Bauteils, von dem er vorsteht, integral ausgeformt oder umgeformt wird.

Eine bevorzugte Ausführungsform der Erfindung sieht vor, dass das jeweilige Bauteil, an dem ein Steckvorsprung oder eine Steckaufnahme gemäß der Erfindung vorgesehen ist, aus einer einzigen Blechplatine hergestellt ist, wobei beispielsweise ein Profil oder Tragprofil, beispielsweise ein Rohr, des Bauteils gebildet wird und der mindestens eine Steckvorsprung und die mindestens eine Steckaufnahme an diesem Tagprofil angeordnet sind.

Das Bauteil, das den mindestens einen Steckvorsprung oder die Steckaufnahme aufweist, umfasst vorteilhaft einen Grundkörper, mit dem der mindestens eine Steckvorsprung integral und einstückig ist. Beispielsweise ist der Steckvorsprung oder die Steckaufnahme aus dem Grundkörper oder einem den Grundkörper bildenden Basiskörper, zum Beispiel einem Profilkörper, ausgeschnitten oder ausgestanzt. An dieser Stelle sei jedoch auch bemerkt, dass es möglich ist, dass der Steckvorsprung oder die Steckaufnahme integral mit dem Grundkörper des Bauteils durch beispielsweise Urformen hergestellt sind. Es sind auch Kombinationen möglich, das heißt dass beispielsweise der Steckzapfen oder Steckvorsprung durch Urformung hergestellt ist, während die Steckaufnahme oder die Zapfenaufnahme beispielsweise durch Umformen hergestellt ist (oder umgekehrt).

Eine bevorzugte Ausführungsform der Erfindung sieht vor, dass das den mindestens einen Steckvorsprung oder die mindestens eine Steckaufnahme aufweisende Bauteil ein Blech umfasst, an dem der mindestens eine Steckvorsprung oder die Steckaufnahme anhand eines Umformens, insbesondere eines Prägevorgangs, ausgebildet sind.

Es ist vorteilhaft, wenn eine Oberfläche des mindestens einen Steckvorsprungs oder der Steckaufnahme kontinuierlich und ohne Unterbrechung in die danebenliegende Kontaktfläche des Bauteils, an dem der Steckvorsprung oder die Steckaufnahme angeordnet sind, übergeht.

Selbstverständlich ist es möglich, dass der Steckvorsprung oder die Steckaufnahme als Ganzes kontinuierlich mit der jeweils daneben liegenden Kontaktfläche verbunden sind, was beispielsweise durch die vorgenannte Umformung oder Urformung ohne weiteres möglich ist.

Eine weitere Variante der Erfindung sieht zweckmäßigerweise vor, dass zwischen einer Wandfläche, beispielsweise dem Boden oder einer seitlichen Widerlagerfläche, der Steckaufnahme und der benachbarten Kontaktfläche des die Steckaufnahme aufweisenden Bauteils, beispielsweise des Querträgers oder Seitenträgers, eine Trennung oder ein Trennschlitz vorhanden ist. Beispielsweise wird die Steckaufnahme durch ein Werkzeug hergestellt, das zunächst den Trennschlitz herstellt und anschließen die Seitenwände und die Bodenwand der Steckaufnahme ausformt. Sinngemäß gilt dies natürlich auch bei dem Steckvorsprung oder Steckzapfen. Zwischen der einen Wandfläche, beispielsweise der frontalen Stirnfläche oder Stirnwand oder einer seitlichen Widerlagerfläche des Steckvorsprungs, und der benachbarten. Kontaktfläche des den Steckvorsprung aufweisenden Bauteils ist ebenfalls vorzugsweise mindestens ein Trennschlitz vorhanden.

Es ist auch möglich, dass Paare von Trennschlitzen vorhanden sind, insbesondere an einander entgegengesetzten Seiten der Steckaufnahme oder des Steckvorsprungs. Mithin sind also beispielsweise der Boden und die Seitenwand bzw. die frontalen Stirnfläche oder Stirnwand und die Seitenwände sozusagen Laschenabschnitte, die aus der Grundfläche bzw. dem Grundkörper des Bauteils, das die Steckaufnahme oder den Steckvorsprung aufweist, ausgeformt sind.

Gerade durch die Herstellung eines Trennschnittes bzw. einer Trennung zwischen einer Wand des Steckvorsprungs oder der Steckaufnahme und der benachbarten Wand des Grundkörpers des Bauteils, an dem der Steckvorsprung oder die Steckaufnahme angeordnet sind, ist es möglich, einen besonders günstigen seitlichen Widerhalt bzw. eine günstige seitliche Abstützung zu schaffen. Mindestens eine Widerlagerfläche des mindestens einen Steckvorsprungs oder der mindestens einen Steckaufnahme ist zweckmäßigerweise von einer Schmalseite oder Schmalseitenwand, eines Wandabschnitts gebildet, der durch den Trennschlitz von einem benachbarten, die Kontaktfläche aufweisenden Grundwandabschnitt getrennt ist. Auch ein Wandabschnitt, an dem die Kontaktfläche ausgebildet ist, hat durch einen Trennschlitz eine Schmalseite, die als eine Widerlagerfläche dienen kann.

Eine bevorzugte Ausführungsform sieht vor, dass an den Kontaktflächen der zu verbindenden Bauteile mehrere, beispielsweise in einer Reihenanordnung, ringförmig oder dergleichen angeordnete Steckvorsprünge und mehrere, insbesondere ebenfalls in einer Reihenanordnung angeordnete Steckaufnahmen vorgesehen sind. Dadurch wird eine besonders günstige Abstützung quer zur Steckrichtung erreicht.

Eine weitere Ausführungsform sieht vor, dass die mindestens eine Steckaufnahme eine erste Steckaufnahme und mindestens eine zweite, in einem Querabstand oder Längsabstand neben der ersten Steckaufnahme angeordnete Steckaufnahme umfasst, so dass der mindestens eine Steckvorsprung wahlweise in die erste oder mindestens eine zweite Steckaufnahmen einsteckbar ist und somit die dadurch miteinander verbundenen Bauteile in einem dem Querabstand entsprechenden Rastermaß in unterschiedlichen Querpositionen oder Längspositionen miteinander verbindbar sind.

Die zu verbindenden Bauteile umfassen zweckmäßigerweise den Querträger und mindestens einen Seitenträger. An zueinander winkeligen Wänden des Seitenträgers und des Querträgers ist zweckmäßigerweise jeweils mindestens eine Paarung bestehend aus Steckvorsprung und Steckaufnahme vorhanden. Bevorzugt ist es, wenn der Seitenträger eine Aufnahme für den Querträger aufweist, wobei zwischen der Aufnahme und dem Querträger die erfindungsgemäße Zapfenverbindung vorhanden ist.

Eine zusätzliche Sicherheit kann man dadurch schaffen, dass beispielsweise vom Kopf des mindestens einen Steckvorsprungs ein Hakenvorsprung quer zu der Steckachse Richtung absteht, der zum Eingriff in eine sich quer zur Steckrichtung erstreckende, beispielsweise am Boden oder unter dem Boden der mindestens einen Steckaufnahme vorgesehene und sich ebenfalls quer zur Steckrichtung erstreckenden Hakenaufnahme-vorgesehen ist. Somit kann der Steckvorsprung im Rahmen einer so genannten Renkbewegung in oder mit der Steckaufnahme verhakt werden.

Mindestens eines der Bauteile umfasst zweckmäßigerweise einen Profilkörper, beispielsweise mit einem polygonalen, z.B. rechteckigen, oder runden Querschnitt.
- Figur 1: eine perspektivische Schrägansicht einer ersten Trägeranordnung von in Fahrtrichtung links oben,
- Figur 2: die Trägeranordnung gemäß Figur 1 von schräg rechts oben,
- Figur 3: hintere Frontalansicht auf die Trägeranordnung gemäß Figuren 1, 2,
- Figur 4: einen Querträger der Trägeranordnung gemäß Figuren 1-3,
- Figur 5: eine perspektivische Schrägansicht eines in Fahrtrichtung rechten Längsendes des Querträgers gemäß Figur 4,
- Figur 6: ein Detail des in Fahrtrichtung linken Seitenträgers der Trägeranordnung gemäß Figuren 1-5,

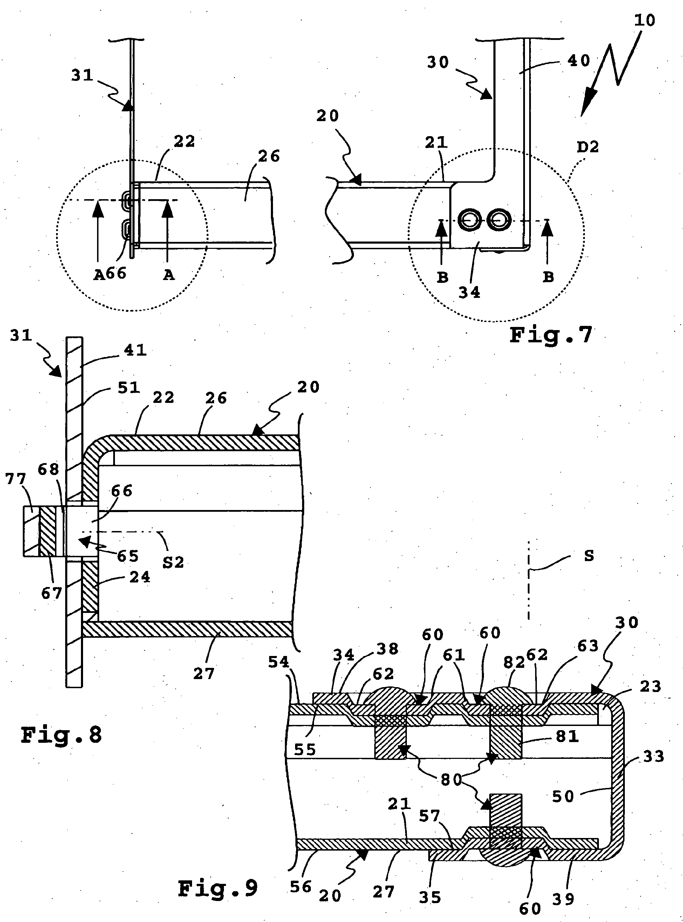

- Figur 7: eine Ansicht frontal von oben auf die Trägeranordnung gemäß Figuren 1 und 2,
- Figur 8: eine Querschnittsansicht eines Details D1 der Trägeranordnung gemäß Figur 7 etwa entlang einer Schnittlinie A-A,
- Figur 9: eine Querschnittsansicht eines weiteren Details D2 der Trägeranordnung gemäß Figur 7 etwa entlang einer Schnittlinie B-B,
- Figur 10: eine Variante des Ausführungsbeispiels gemäß Figur 1, bei dem die Seitenträger in unterschiedlichen Längs- und Querpositionen am Querträger angeordnet sind,
- Figur 11: eine Schrägansicht von hinten rechts oben auf eine weitere erfindungsgemäße, nur teilweise dargestellte Trägeranordnung, von der in
- Figur 12: ein Detail D3 aus Figur 11 von hinten und in
- Figur 13: das Detail D3 von oben dargestellt sind,
- Figur 14: eine Querschnittsansicht des Details D3, etwa entlang einer Schnittlinie C-C in Figur 13,

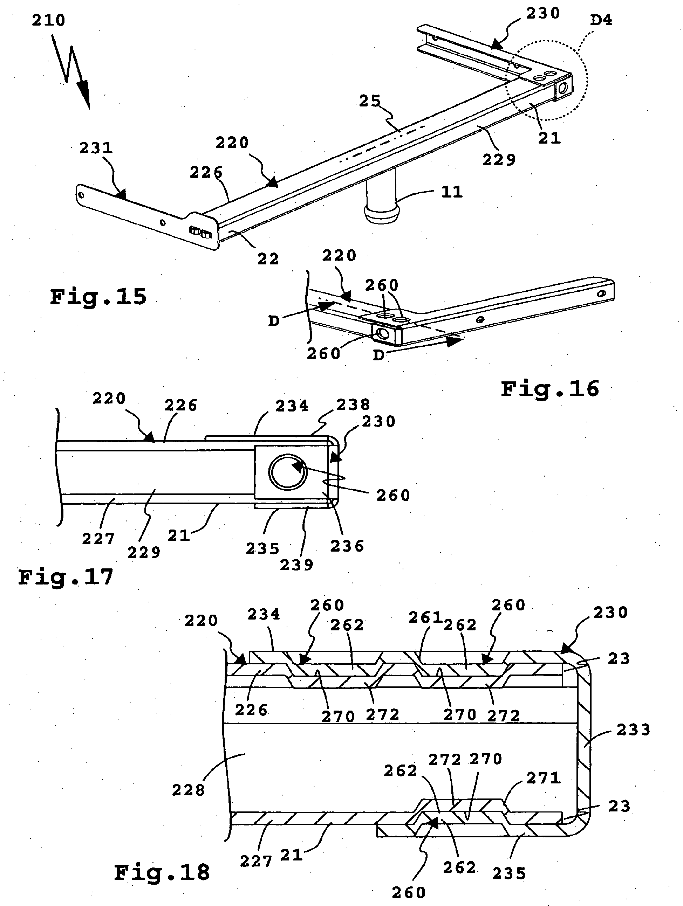

- Figur 15: eine weitere erfindungsgemäße Trägeranordnung perspektivisch von schräg links oben, von der in
- Figur 16: ein rechter Teil, ein Detail D4, von schräg rechts oben dargestellt ist,
- Figur 17: das Detail D4 von frontal hinten,
- Figur 18: das Detail D4 im Querschnitt, entlang einer Schnittlinie D-D in Figur 16,

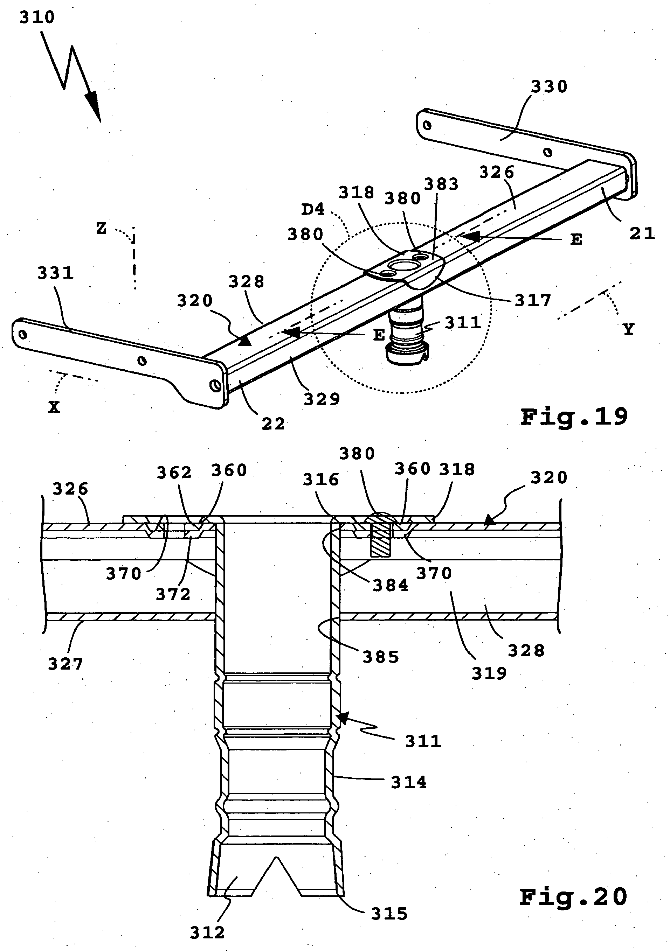

- Figur 19: eine perspektivische Schrägansicht einer weiteren Trägeranordnung, die eine erfindungsgemäß befestigte Halterung für einen Kupplungsarm aufweist, und
- Figur 20: ein Detail der Trägeranordnung gemäß Figur 19 entlang einer Schnittlinie E-E in Figur 19.

Trägeranordnungen 10, 110, 210, 310, 410 dienen zur Befestigung einer Anhängekupplung 90 und/oder eines schematisch angedeuteten Lastenträgers 95. Die Trägeranordnungen 10, 110, 210, 310, 410 sind an einer Karosserie 101 eines Kraftfahrzeugs 100 befestigbar oder befestigt, beispielsweise an dessen Heck 102. Von dem Kraftfahrzeug 100 sind exemplarisch Räder 103 dargestellt. Das Kraftfahrzeug 100 ist beispielsweise ein Personenkraftwagen, insbesondere mit einem Verbrennungsmotor und/oder einem Elektromotor. In der nachfolgenden Beschreibung sind gleiche oder ähnliche Komponenten in der Regel mit denselben Bezugs-ziffern versehen, teilweise zur Verdeutlichung von Unterschieden mit um jeweils 100 verschiedenen Bezugsziffern.

Die Trägeranordnungen 10, 110, 210, 310, 410 sind zweckmäßigerweise hinter einem Stoßfänger des Kraftfahrzeugs 100 verborgen. Die Trägeranordnungen 10, 110, 210, 310, 410 haben Querträger 20, 120, 220, 320, 420, die sich entlang des Hecks 102 in Fahrzeugquerrichtung des Kraftfahrzeugs 100 erstrecken. Die Querträger 20-420 werden von Seitenträgern 30, 31, 130 131, 230, 231, 330, 331, 430, 431 gehalten, die sich jeweils in Fahrzeuglängsrichtung des Kraftfahrzeugs 100 erstrecken. Die Seitenträger 30-431 sind beispielsweise mit der Karosserie 101 verschraubt, wofür Durchtrittsöffnungen 32 an den Seitenträgern 30-431 vorgesehen sind, durch die Schrauben (nicht dargestellt) durchgesteckt und mit der Karosserie 101 verschraubbar sind.

An den Querträgern 20, 120, 220, 320, 420 sind beispielsweise Halterungen 11, 311 für die Anhängekupplung 90 angeordnet. Die Halterungen 11, 311 umfassen beispielsweise eine Halteaufnahme 12, in die ein Steckende 92 eines Kupplungsarms 91 der Anhängekupplung 90 einsteckbar ist. Am Kupplungsarm 91 befindet sich noch ein Kuppelstück 93, zum Beispiel eine Kupplungskugel, zum Ankuppeln eines Anhängers. Anstelle der Halterungen 11, 311 könnte auch beispielsweise eine Lagereinrichtung zum beweglichen Lagern einer Anhängekupplung, beispielsweise zum Schwenken und/oder linearen Verschieben eines Kupplungsarms, vorgesehen sein, so dass der Kupplungsarm zwischen einer nach hinten vor das Heck 102 vorstehenden Gebrauchsstellung und einer beispielsweise hinter den Stoßfänger des Kraftfahrzeugs 100 zurück geschwenkten, verborgenen Nichtgebrauchsstellung beweglich ist, beispielsweise manuell betätigbar und/oder motorisch betätigbar. Ferner eignen sich die Trägeranordnungen 10, 110, 210, 310, 410 auch für fest montierte Kupplungsarme.

An den Querträgern 20, 120, 220, 320, 420 können auch Halterungen 13 zum Halten des Lastenträgers 95 vorgesehen sein. Die Halterungen 13 umfassen beispielsweise Steckaufnahmen, in die Steckvorsprünge 96 des Lastenträgers 95 einsteckbar sind. Der Lastenträger 95 hat beispielsweise eine nicht dargestellte Tragplattform und/oder Tragelemente zum Tragen einer Last, zum Beispiel Rinnen zum Tragen eines Fahrrads. Bei dem Lastenträger 95 kann es sich beispielsweise um einen Fahrradträger handeln.

Die Trägeranordnungen 10, 110, 210, 310, 410, insbesondere die Querträger 20-420 und die Seitenträger 30-431, bestehen zweckmäßigerweise aus Metall, insbesondere Stahl oder Aluminium. Zweckmäßigerweise sind diese Komponenten aus Blech hergestellt.

Die Querträger 20-420 sind an ihren jeweiligen Längsenden 21 und 22, das heißt bezüglich der Längserstreckungsrichtung 25, eines jeweiligen Querträgers 20-420 Endbereich, mit den Seitenträgern 30-430, 31-431 verbunden. Die Querträger 20-420 erstrecken sich bezüglich einer Fahrtrichtung des Kraftfahrzeugs 100 quer, während die Seitenträger 30-430, 31-431 sich längs zur Fahrtrichtung erstrecken. Die Seitenträger 30-430, 31-431 sind beispielsweise mit seitlichen Bereichen der Karosserie 101 verschraubt, verschweißt oder in sonstiger Weise dort befestigt.

Die Verbindung zwischen den Querträgern 20, 120, 220, 420 und den Seitenträgern 30, 31, 130, 131, 230, 231, 430, 431 ist in erfindungsgemäßer Weise gelöst, was selbstverständlich auch bei den an sich konventionell mit dem Querträger 320 verbundenen Seitenträgern 330 und 331 möglich wäre. Bei der Trägeranordnung 310 kommt es jedoch auf die erfindungsgemäß ausgestaltete Verbindung zwischen der Halterung 311, die eine Steckaufnahme oder Halteaufnahme 312 für den Kupplungsarm 91, beispielsweise dessen Steckende 92, hat, und dem Querträger 320 an.

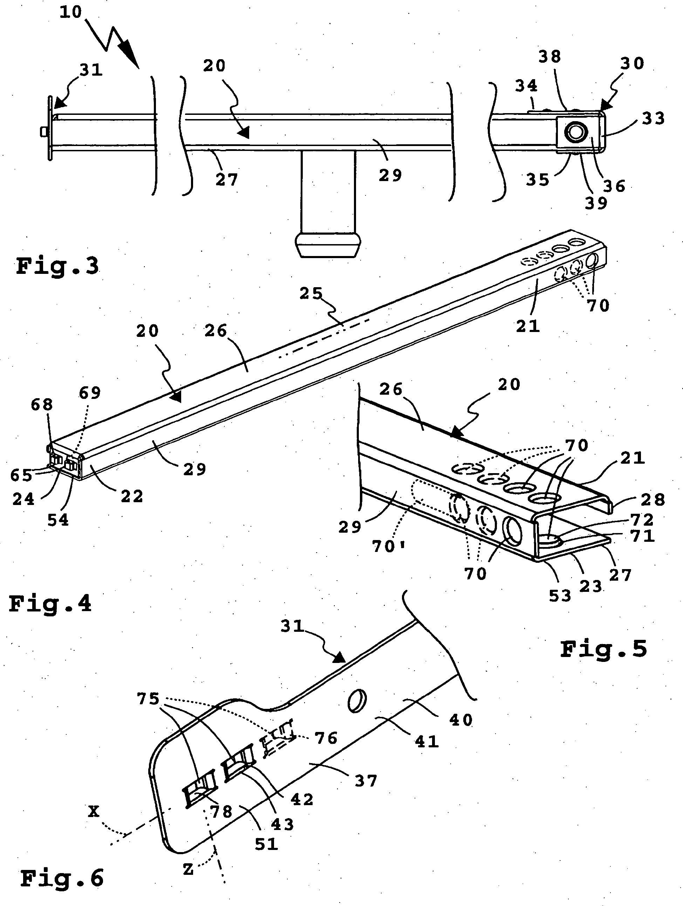

Die Querträger 20-420 sind als Profilelemente, beispielsweise als Vierkantprofile, ausgestaltet. Die Querträger 20-420 weisen eine obere Wand 26-426, eine untere Wand 27-427 sowie eine in Fahrtrichtung vordere Wand 28-428 und eine in Fahrtrichtung hintere Wand 29-429 auf. Zwischen diesen Wänden können sich Eckbereiche oder Kantenbereich erstrecken, was beispielsweise in Figur 5 deutlich sichtbar ist. Weiterhin können die vorgenannten Wände einen Innenraum komplett umschließen, das heißt dass durch die Wände 26-429 im Prinzip Umfangswände gebildet sind.

Es ist aber auch möglich, dass eine Wand sich nicht bis zur nächsten benachbarten Wand erstreckt, so dass beispielsweise wie in Figur 5 sichtbar zwischen der unteren Wand 27 und der vorderen Wand 28 ein Zwischenraum oder Freiraum gebildet ist.

Mithin kann auf die erfindungsgemäße Weise sowohl ein im Umfang geschlossenes Profil als auch ein beispielsweise seitlich offenes Profil, zum Beispiel L-förmiges oder U-förmiges Profil in sehr günstiger Weise mit einem benachbarten Bauteil, zum Beispiel einem Seitenträger oder einer Halterung für eine Anhängekupplung oder einen Lastenträger verbunden werden.

Beispielsweise umfassen die Seitenträger 30, 130, 230 und 430 eine Seitenwand 33, 133, 233, 433, von der im vorderen Kontaktbereich mit den Querträgern 20-420 jeweils eine obere Wand 34, 134, 234, 434 und eine untere Wand 35, 135, 235, 435 in der Art eines Seitenschenkels absteht. Die obere Wand 34, 134, 234, 434 und die untere Wand 35, 135, 235, 435 bilden zusammen mit der Seitenwand 33, 133, 233, 433 eine U-förmige Aufnahme, in welcher der Querträger 20-420 aufgenommen ist.

Die obere Wand 26-426 des Querträgers 20-420 liegt mit ihrer Außenseite (in der Zeichnung oben), also einer Kontaktfläche 54, an der unteren Seite der Wand 34, 134, 234, 434, also einer Kontaktfläche 55, flächig an und die untere Wand 27-427 liegt flächig mit ihrer Oberseite (in der Zeichnung die untere Seite), also einer Kontaktfläche 56, an der unteren Wand 35, 135, 235, 435, also einer Kontaktfläche 57, an.

Bei den Seitenträgern 30, 230, 430 ist zudem noch eine vordere Stirnwand 36, 236, 436 vorgesehen, die sich zwischen der oberen Wand 34, 234, 434 und der unteren Wand 35, 235, 435 erstreckt. An der eine weitere Kontaktfläche 59 bereitstellenden Stirnwand 36, 236, 436 liegen die Querträger 20, 220, 420 mit ihrer in Fahrtrichtung hinteren Wand 29, 229, 429, also einer weiteren Kontaktfläche 58, flächig an.

Die Wand 34, 234, 434 die untere Wand 35, 235, 435 und die Stirnwand 36, 236, 436 begrenzen jeweils eine Aufnahme oder Tasche, in der das Längsende 21 des Querträgers 20, 220, 420 aufgenommen ist. Die Stirnwände 36, 236, 436 nehmen auf die Anhängekupplung 90 wirkende Zugkräfte optimal auf.

Die Wände 34, 134, 234, 434 und 35, 135, 235, 435 haben an ihrem den Querträger 20-420 haltenden Endbereich 37 jeweils zu diesem vorstehende Schenkelvorsprünge 38-438, 39-439.

Die Wände 34, 134, 234, 434 und 35, 135, 235, 435 sind im zur Befestigung mit dem Kraftfahrzeug 100 bzw. dessen Karosserie 101 vorgesehenen Tragabschnitt 40 gegenüber den Schenkelvorsprüngen 38-438, 39-439 kürzer, stehen also weniger weit zu den Querträgern vor, wobei dennoch ein U-förmiges Profil, also ein sehr belastbares Profil vorhanden ist.

Dem Querträger 20-420 zugewandte Innenseiten des Seitenträgers 30-430 und des Seitenträgers 31-431 bilden Kontaktflächen 50, 51, an denen die Seitenträger 30-431 mit einer Stirnseite 23 und einer Stirnwand 24, also Kontaktflächen 53, 54 anliegen.

Die Seitenträger 31, 331 sowie 431 weisen jeweils plattenförmige Wände 41 auf. Die vorderen Endbereiche 37 der Seitenträger 31, 331 sowie 431 haben gegenüber den Tragabschnitten 40 eine etwas größere Flächenausdehnung, so dass die Längsenden 21 und 22 der Querträger 20-420 stirnseitig vollständig und mithin also großflächig abgestützt sind.

Vor die Seitenträger 30, 130, 230, 430 stehen Steckvorsprünge 60 vor, die zum Eingriff in Steckaufnahmen 70 an den gegenüberliegenden Kontaktflächen 54, 56 und 58 des Querträgers 20, 120, 220, 420 vorgesehen sind.

Die Steckvorsprünge 60 weisen konisch schräg verlaufende Seitenwände 61 auf, die sich zwischen den Kontaktflächen 55, 57 und 59 und einer frontseitigen Stirnwand 62 des Steckvorsprungs 60 erstrecken. Die Steckvorsprünge 60 sind als Steckzapfen ausgestaltet und beispielsweise durch ein Tiefziehverfahren, zum Beispiel Prägen, Drücken oder dergleichen, hergestellt.

Die Steckaufnahmen 70 bilden Zapfenaufnahmen für die Steckvorsprünge 60 aus. Sie sind an den Kontaktflächen 54, 56 und 58 des Querträgers 20, 120, 220, 420 ausgebildet. Die Steckaufnahmen 70 haben jeweils eine Seitenwand 71, die sich zwischen der Kontaktfläche 54, 56, 58 und einer Bodenwand 72 der Steckaufnahme 70 erstreckt. Auch die Steckaufnahmen 70 sind durch ein Tiefziehverfahren hergestellt.

Die Seitenwände 61, 71 liegen mit ihren einander gegenüberliegenden Seiten flächig aneinander an. Die den Seitenwänden 71 zugewandten Außenseiten der Seitenwände 61 und die den Seitenwänden 61 zugewandten Innenseiten der Seitenwände 71 bilden jeweils Widerlagerflächen, die einer Scherbewegung der durch die Steckvorsprünge 60 und die Steckaufnahmen 70 miteinander verbundenen Bauteile, nämlich des Querträgers 20, 120, 220, 420 und des Seitenträgers 30, 130, 230, 430 quer zu einer Steckachse S, entlang derer die Steckvorsprünge 60 in die Steckaufnahmen 70 einführbar sind, entgegenwirken.

Zu einer zugfesten Festlegung in Richtung der Steckachse S sorgen zusätzliche vorgesehene Formschlusselemente in Gestalt von Bolzen 80, deren Stangenabschnitte oder Bolzenabschnitte 81 die Stirnwand 62 und die Bodenwand 72 durchsetzen. Dort sind zweckmäßigerweise Bohrungen oder sonstige Durchtrittsöffnungen schon vor dem Einsetzen der Bolzen 80 vorgesehen. Anstelle der Bolzen 80 könnten auch Nieten verwendet werden.

Weiterhin ist es möglich, selbstschneidende Schrauben zu verwenden, d.h. dass sich die Bolzen 80 sozusagen selbst ihre Durchtrittsöffnungen durch die Stirnwand 62 und/oder die Bodenwand 72 schneiden. An dem Bolzenabschnitt 81 kann selbstverständlich auch ein Schraubgewinde vorgesehen sein, um eine Mutter oder dergleichen anderes Widerlagerelement aufzuschrauben. Weiterhin ist es denkbar, dass beispielsweise an den Bodenwänden 72 Durchtrittsöffnungen mit Gewinden vorgesehen sind, in die die Bolzenabschnitte 81 einschraubbar sind.

Insbesondere weil die Steckvorsprünge 60 durch einen Tiefziehvorgang oder Prägevorgang hergestellt sind, ist oberhalb der Stirnwand 62 eine Vertiefung 63 vorhanden. Köpfe 82 der Bolzen 80 stehen vorzugsweise nicht oder nur unwesentlich nach außen vor die Vertiefungen 63 vor.

Es versteht sich, dass die Steckvorsprünge 60 und/oder die Steckaufnahmen 70 auch im Rahmen eines Urform-Verfahrens herstellbar sind.

Die Steckvorsprünge 60 und die Steckaufnahmen 70 sind integral mit ihrer Umgebung verbunden, das heißt mit den sie umgebenden Wandabschnitten. Weiterhin sind die Steckvorsprünge 60 und die Steckaufnahmen 70 umfangsseitig rund, was jedoch nicht zwingend ist, was später noch deutlich wird.

Schließlich haben die Seitenwände 61, 71 eine konische Schrägneigung, so dass die Steckvorsprünge 60 leicht in die Steckaufnahmen 70 eingesteckt werden können.

Der Begriffe "einstecken" und "Steckachse" S sind jedoch nicht nur im Sinne eines linearen Verstellens oder Steckens zu verstehen, sondern kann beispielsweise auch umfassen, dass beispielsweise die Schenkelvorsprünge 38 und 39 und die Stirnwand 36 sozusagen zum jeweiligen Querträger 20-420 hin gebogen sind, so dass im Prinzip eine leicht bogenförmige Steckachse S gegeben ist.

Im Bereich der Seitenträger 31, 231 und 431 ist jedoch eine andere Steckbewegung vorgesehen, nämlich dass die Seitenträger 31, 231 und 431 linear entlang einer beispielsweise vertikal zur Stirnwand 24 verlaufenden Steckachse S2 gesteckt werden. Dann greifen an den Kontaktflächen 54 (Stirnseiten 24) angeordnete und vor diese Kontaktflächen 54 vorstehende Steckvorsprünge 65 in Steckaufnahmen 75 an den Seitenträgern 31, 231, 431 ein.

Die Steckvorsprünge 65 weisen jeweils eine Stirnwand 67 auf, die über Seitenwände 66 mit dem benachbarten Bereich des Bauteils, an dem der Steckvorsprung 65 angeordnet ist, nämlich dem Querträger 20, 220 und 420 bzw. der Stirnwand 24 ein. Allerdings sind zwischen der Stirnwand 67 und der Seitenwand 24 Trennschlitze 68 vorhanden. Mithin sind also die Seitenwände 66 und die Stirnwand 67 in der Art einer Biegelasche aus dem Grundmaterial der Stirnwand 24 seitlich ausgeschnitten und durch einen Prägevorgang gebogen.

Die Steckaufnahmen 75 sind korrespondierend hergestellt, das heißt sie haben eine Bodenwand 77, die über Seitenwände 76 mit der benachbarten Wand 41 des Seitenträgers 31, 231, 431 verbunden ist. Zwischen den Seitenwänden 76 und der benachbarten Wand 41 sind Trennschlitze 78 vorhanden.

Der die Seitenwände 76 und die Bodenwand 77 bildende Wandabschnitt ist also aus dem Grundmaterial der Wand 41 seitlich ausgestanzt, wobei die Trennschlitze 78 entstehen, und anschließend umgeformt, z.B. geprägt.

Die Seitenwände 66, 76 verlaufen im wesentlichen rechtwinkelig zu der Seitenwand 24 oder der Wand 41. Die Stirnwand 67 und die Bodenwand 77 verlaufen etwa parallel zu der Seitenwand 24 oder der Wand 41.

Wenn die Steckvorsprünge 65 in die Steckaufnahmen 75 eingesteckt sind, liegen die Stirnwand 67 und die Bodenwand 77 flächig aneinander anliegen, ebenso die Seitenwände 66 und 76. Vorteilhaft ist ein Stoffschluss vorgesehen, das heißt die vorgenannten Wände sind beispielsweise miteinander verschweißt oder verklebt.

Es ist auch möglich, dass zum Beispiel von der Stirnwand 67 seitlich noch ein Hakenvorsprung 69 absteht, der zum Einhaken in eine Hakenaufnahme an der korrespondierenden Steckaufnahme 75 vorgesehen ist, d.h. dass eine Renkbewegung quer zur Steckachse S2 durchgeführt wird. Der Hakenvorsprung 69 könnte beispielsweise in den Trennschlitz 78, der insofern eine Hakenaufnahme darstellt, eingehakt werden.

An sich wäre es denkbar, dass zur Steckachse S2 schräge Abschnitte der Seitenwände 66 und 76 sozusagen aneinander gleiten, wobei die Steckvorsprünge 65 aus den Steckaufnahmen 75 in einer X-Richtung relativ leicht heraus gelangen könnten. Gegen eine solche Gefahr bzw. eine bessere Festlegung gegen eine Scherbewegung könnte beispielsweise helfen, wenn mindestens eine der Kombinationen von Steckvorsprung 65 und Steckaufnahme 75 um 90° gedreht wäre, so dass auch die nachfolgend in Bezug auf eine Scherfestigkeit in Y-Richtung erläuterte Maßnahme greift.

Die Seitenwand 66 des Steckvorsprungs 65 liegt mit ihrer Schmalseite an einer Schmalseitenwand 42 der Wand 41 des Seitenträgers 31 an. Die Schmalseitenwand 41 befindet sich an einem Ausschnitt 43, der aus der Wand 41 zur Bildung der Steckaufnahme 75 ausgebildet ist. Die Bodenwand 77 und die Seitenwand 76 sind nämlich unter Bildung des Ausschnittes 43 aus der Wand 41 sozusagen ausgeschnitten oder ausgestanzt (Figur 6).

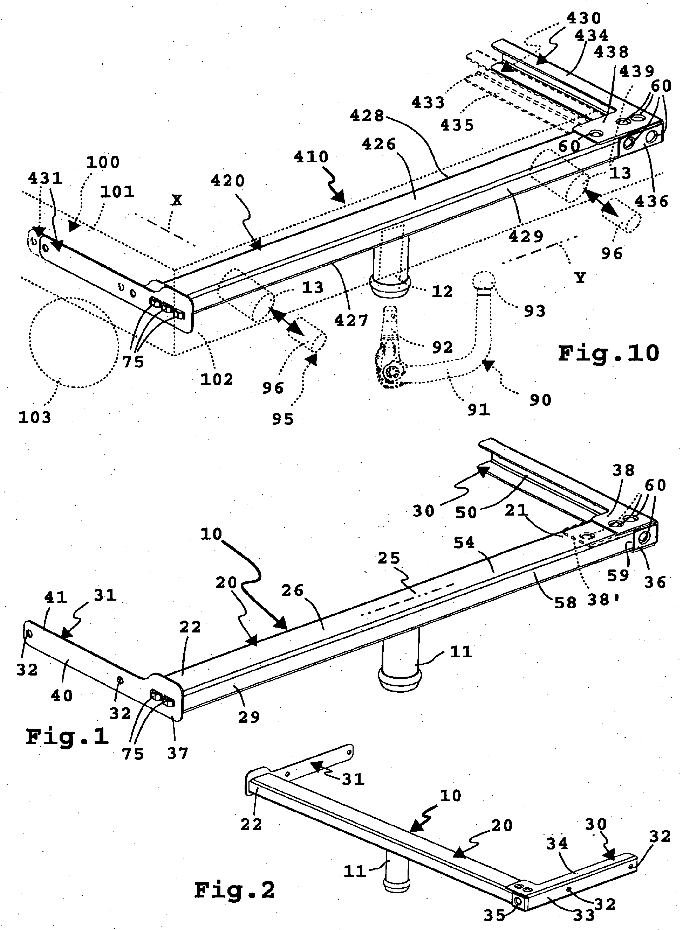

Das erfindungsgemäße Konzept erlaubt eine variable Verbindung von Bauteilen in unterschiedlichen Relativpositionen zueinander:
Beispielsweise sind in Fahrzeuglängsrichtung orientiert zwei Steckvorsprünge 75 beim Querträger 20, 220, 420 vorgesehen. Am Seitenträger 31 und 231 sind jeweils 2 korrespondierende Steckaufnahmen 70 vorgesehen. Der Seitenträger 431 hat eine weitere, neben den anderen Steckaufnahmen 70 angeordnete Steckaufnahme 70, so dass der Seitenträger 431 in unterschiedlichen Längspositionen oder Rastpositionen am Querträger 420 montiert werden kann (Figur 10).

Nicht nur in einer X-Richtung, sondern auch beispielsweise in einer Y-Richtung ist es möglich, unterschiedliche Relativpositionen der miteinander zu verbindenden Bauteile zu realisieren. Bei dem in Figur 1 dargestellten Ausführungsbeispiel des Seitenträgers 30 ist beispielsweise ein verlängerter Schenkelvorsprung 38' angedeutet, an dem ein weiterer, beispielsweise zur Verbesserung eines Haltens am Querträger 20 vorgesehener, Steckvorsprung 60 vorgesehen ist.

Dieser Schenkelvorsprung 38' kann aber auch dazu genutzt werden, um den Seitenträger 30 in einer anderen Position bezüglich der Y-Achse am Querträger 20 zu befestigen. Das ist bei der Trägeranordnung 410 angedeutet. Der Seitenträger 430 kann nämlich in Y-Richtung aufgrund seines relativ langen, einen weiteren Steckvorsprung 60 aufweisenden Vorsprungschenkels 438 und der ebenso weiter in Richtung des Querträgers 420 vorstehenden Stirnwand 436, an der ebenfalls ein weiterer Steckvorsprung 60 vorgesehen ist, in zwei in Y-Richtung beabstandeten Positionen am Querträger 420 befestigt werden. Der Seitenträger 430 ist in gestrichelten Linien in einer ersten Y-Position, in durchgezogenen Linien in einer zweiten Y-Position bezüglich des Querträgers 420 dargestellt.

Es ist auch möglich, dass z.B. eine als Langloch ausgestaltete Steckaufnahme vorgesehen ist, z.B. eine Steckaufnahme 70', um eine alternative Befestigung von Bauteilen, z.B. des Querträgers 20 und des Seitenträgers 30, in unterschiedlichen Längspositionen zu ermöglichen (Figur 5). Einer der Steckvorsprünge 60 kann beispielsweise bezüglich der Y-Achse in unterschiedlichen Längspositionen in die Steckaufnahme 70' eingreifen, ist jedoch in Z-Richtung formschlüssig in der Steckaufnahme 70' aufgenommen.

Bei der Trägeranordnung 110 sind die Seitenträger 130 ebenfalls anhand von erfindungsgemäß ausgestalteten Steckverbindungen mit dem Querträger 120 verbunden. Beispielsweise sind an der oberen Wand 134 des Seitenträgers 130 je 2 Steckvorsprünge 160 vorhanden, die in korrespondierende Steckaufnahmen 170 an der oberen Wand 126 am Längsende 21 des Querträgers 120 eingreifen. An der unteren Wand 127 ist nur eine Steckaufnahme 170 vorhanden, die zum Eingriff eines am Schenkelvorsprung 139 vorgesehenen Steckvorsprungs 160 dient.

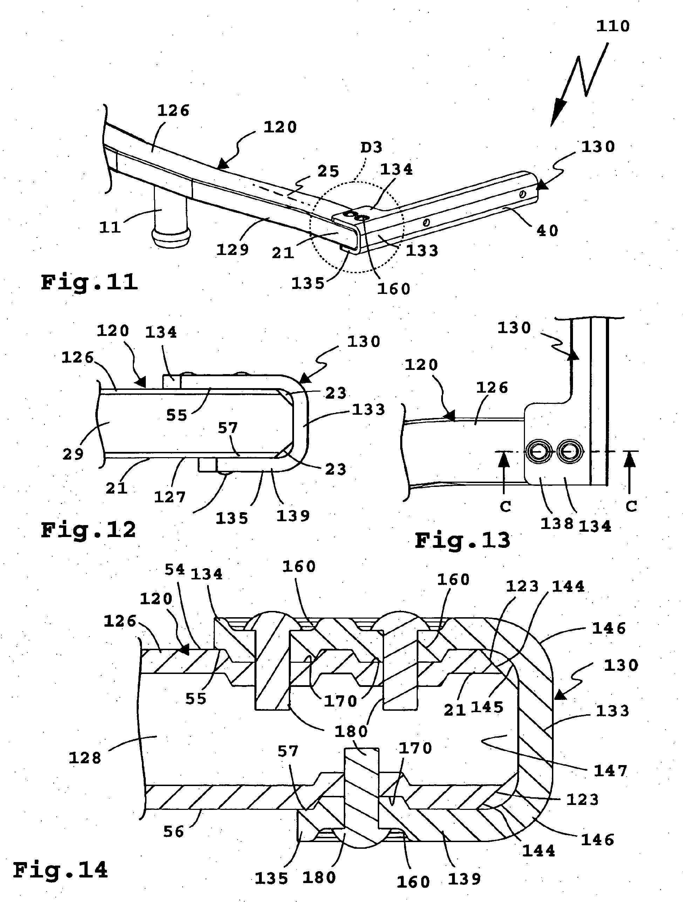

Die Steckvorsprünge 160 und die Steckaufnahmen 170 entsprechenden im wesentlichen den Steckvorsprüngen 60 und 70, so dass auf detaillierte Ausführungen verzichtet wird. Insbesondere ist es möglich, die Steckvorsprünge 160 mit den Steckaufnahmen 170 stoffschlüssig zu verbinden, beispielsweise zu Verkleben oder wie in Figur 14 dargestellt anhand von durchgesteckten Bolzen 180 zu sichern.

Eine günstige formschlüssige Verbindung zwischen dem Querträger 120 und den Seitenträgern 130 sieht vor, dass die Stirnseiten 123 an Längsenden 21 und 22 eine Schräge 144 aufweisen, so dass die Längsenden 21 und 22 sehr tief in die durch die obere und untere Wand 134, 135 sowie die Seitenwand 133 begrenzte Aufnahme 147 eintauchen können. Die Abschrägung oder Schräge 144 erlaubt es nämlich, dass die Längsenden 21 und 22 bis in innere Bogenbereiche 145 von Krümmungsabschnitten 146 der Aufnahme 147 eintauchen können.

Eine Verbindung erfindungsgemäßer Steckverbindungen anhand von Bolzen, beispielsweise Bolzen 80 oder 18o ist nicht unbedingt nötig. Beispielsweise ist bei der Trägeranordnung 210 nur eine stoffschlüssige oder formschlüssige Verbindung oder beides vorhanden. An sich den Steckvorsprüngen 60, 160 entsprechende Steckvorsprünge 260 tauchen in korrespondierende, den Steckaufnahmen 70 und 170 entsprechende Steckaufnahmen 270 ein. Allerdings ist ein Durchmesser von Stirnwänden 262 und Bodenwänden 272 relativ groß bemessen, so dass dort eine große Oberfläche oder Kontaktfläche zur stoffschlüssigen Verbindung der Steckvorsprünge 260 mit den Steckaufnahmen 270 möglich ist. Die Steckvorsprünge 260 und die Steckaufnahmen 270 weisen eine relativ geringe Tiefe auf, das heißt dass ihre Seitenwände 261, 271, die sich am Außenumfang des Steckvorsprungs 260 und am Innenumfang der Steckaufnahme 270 erstrecken, eine relativ kleine Oberfläche darstellen.

Bei der Trägeranordnung 310 ist eine Halterung 311 für beispielsweise den Kupplungsarm 91 in erfindungsgemäßer Weise anhand von Steckvorsprüngen 360, die in Steckaufnahmen 370 eingreifen, befestigt. Anstelle der Halterung 311 könnte selbstverständlich auch ein Schwenklager oder dergleichen anderes Bauelement vorgesehen sein, um beispielsweise den Kupplungsarm zu schwenken und/oder axial zu verschieben. Weiterhin ist es möglich, beispielsweise eine Steckaufnahme in der Art der Halterungen 13 auf die nachfolgend beschriebene Weise am Querträger 320 zu befestigen.

Die Halterung 311 weist eine Halteaufnahme 312, zum Beispiel eine Steckaufnahme, für den Kupplungsarm 91 auf. Die Halteaufnahme 312 ist in einer Hülse 314 vorgesehen. Die Hülse 314 weist die am einen Längsende 315 eine Einstecköffnung zum Einstecken des Kupplungsarms 91 auf und ist mit ihrem anderen Längsende 316 an dem Querträger 320 befestigt. Vor die Hülse 314 steht am Längsende 316 ein Flanschvorsprung 318 nach radial außen vor. Der Flanschvorsprung 318 liegt auf der oberen Wand 326 des Querträgers 320 auf und stützt sich dort ab. Die Hülse 314, mithin also die Halterung 311, durchdringt einen Innenraum 319 des Querträgers 320, der zwischen den Wänden 326 und 327 vorgesehen ist. Weiterhin durchdringt die Halterung 311 eine Durchstecköffnung 385 an der unteren Wand 327 und eine Durchstecköffnung 384 an der oberen Wand 326. Die Halterung 311 könnte also, z.B. vor der Umform-Bearbeitung ihres unteren Abschnittes, von oben her durch die Durchstecköffnungen 384 und 385 hindurch gesteckt werden. Sie steht nach unten vor den Querträger 320 vor.

Der Flanschvorsprung 318, der beispielsweise ringförmig vor die Hülse 314 vorsteht, ermöglicht eine günstige Abstützung in Z-Richtung. Die Durchstecköffnungen 384 und 385 sorgen für eine Festlegung der Hülse in X-Richtung und Y-Richtung, so dass allein dadurch schon eine sehr günstige Befestigung und ein formschlüssiger Halt der Halterung 311 am Querträger 320 gegeben ist.

Zudem sorgen an dem Flanschvorsprung 318 vorgesehene Steckvorsprünge 360, die in Steckaufnahmen 370 an der oberen Wand 326 eingreifens somit also eine Art Verzapfung der Halterung 311 am Querträger 320 schaffen, für einen guten Halt. Es ist beispielsweise möglich, dass die an sich den Steckvorsprüngen 360 gleichenden Steckvorsprünge 360 mit den Steckaufnahmen 370, die ansonsten den Steckaufnahmen 70 ähneln, stoffschlüssig verbunden, beispielsweise verklebt, sind. Eine weitere Befestigungsmöglichkeit ist beispielsweise durch einen Bolzen 380 geschaffen, der die Stirnwand 362 und Bodenwand 372 des Steckvorsprungs 360 und der Steckaufnahme 370 durchdringt und somit auch für eine zugfeste Befestigung in Y-Richtung sorgt.

Der Flanschvorsprung 318 hat vorteilhaft noch sich an den vorderen und/oder hinteren Wänden 328, 329 des Querträgers 320 abstützende Abschnitte 317. Gegenüber einem Abschnitt 383 des Flanschvorsprungs 318, der auf der oberen Wand 326 aufliegt, sind die Abschnitte 317 beispielsweise abgewinkelt.

## Patentansprüche

1. Trägeranordnung für eine Anhängekupplung oder einen Lastenträger, als Bauteile umfassend einen Querträger (20-420) und gegebenenfalls mit dem Querträger (20-420) verbundene Seitenträger (30-430; 31-431) zur Montage an einem Heck (102) einer Karosserie eines Fahrzeugs sowie mindestens eine an dem Querträger (20-420) angeordnete Halterung (11, 13, 311) für eine Anhängekupplung oder für ein Kupplungsteil eines Lastenträgers, wobei mindestens zwei Bauteile oder Bauteilkomponenten der Trägeranordnung (10-410) mit Kontaktflächen (50-59) aneinander anliegen, **dadurch gekennzeichnet, dass** vor die Kontaktfläche (50-59) des einen Bauteils oder der einen Hauteilkomponente mindestens ein als Steckzapfen ausgestalteter Steckvorsprung (60-360) vorsteht, der in mindestens eine als Zapfenaufnahme ausgestaltete Steckaufnahme (70-370) an der Kontaktfläche (50-59) des anderen Bauteils oder der anderen Hauteilkomponente entlang einer Steckachse (S, S2) einsteckbar ist und in die Steckaufnahme (70-370) eingreift, so dass quer zu der Kontaktfläche (50-59) erstreckende seitliche Widerlagerflächen des Steckvorsprungs (60-360) und der Steckaufnahme (70-370) im Eingriff sind.

2. Trägeranordnung nach Anspruch 1, **dadurch gekennzeichnet, dass** der mindestens eine Steckvorsprung (60-360) und die den Steckvorsprung (60-360) aufnehmende Steckaufnahme (70-370) stoffschlüssig, insbesondere durch Kleben und/oder Schweißen, und/oder Clinchen und/oder anhand mindestens eines mechanischen Formschlusselements, insbesondere einer Schraube oder eines Niets, miteinander verbunden sind.

3. Trägeranordnung nach Anspruch 1 oder 2, **dadurch gekennzeichnet, dass** die mindestens eine Steckaufnahme (70-370) einen Boden (72-372) und/oder der mindestens eine Steckvorsprung (60-360) an seinem freien Ende eine Stirnwand (62-362) aufweisen und/oder zwischen Widerlagerflächen bereitstellenden Seitenwänden des Steckvorsprungs (60-360) oder der Steckaufnahme (70-370) ein Abstand vorhanden ist.

4. Trägeranordnung nach Anspruch 3, **dadurch gekennzeichnet, dass** der Boden (72-372) eine Stützfläche bereitstellt, an der sich der Steckvorsprung (60-360) mit seiner Stirnwand (62-362) abstützt und/oder ein den Boden (72-372) der Steckaufnahme (70-370) und die frontale Stirnwand (62-362) oder den Kopf des Steckvorsprungs (60-360) durchdringendes Formschlusselement, insbesondere eine Schraube oder eines Niets, vorgesehen ist.

5. Trägeranordnung nach einem der vorhergehenden Ansprüche, **dadurch gekennzeichnet, dass** der mindestens eine Steckvorsprung (60-360) an seiner seinem freien Kopfende entgegengesetzten Seite eine vertiefung aufweist, insbesondere zur Aufnahme eines Kopfes eines Niets oder einer Schraube.

6. Trägeranordnung nach einem der vorhergehenden Ansprüche, **dadurch gekennzeichnet, dass** die mindestens eine Steckaufnahme (70-370) und/oder der mindestens eine Steckvorsprung (60-360) eine zylindrische, insbesondere kreiszylindrische, oder eine im Querschnitt polygonale, insbesondere rechteckige, und/oder eine konische Innenumfangskontur oder Außenumfangskontur aufweisen.

7. Trägeranordnung nach einem der vorhergehenden Ansprüche, **dadurch gekennzeichnet, dass** eine sich in Richtung der Steckachse (S, S2) erstreckende Einstecklänge des mindestens einen Steckvorsprungs (60-360) und/oder der mindestens einen Steckaufnahme (70-370) kleiner als ein sich quer zur Steckachse (S, S2) erstreckender Durchmesser des Steckvorsprungs (60-360) oder der Steckaufnahme (70-370) ist.

8. Trägeranordnung nach einem der vorhergehenden Ansprüche, **dadurch gekennzeichnet, dass** mindestens eine Widerlagerfläche der mindestens einen Steckaufnahme (70-370) und/oder des mindestens einen Steckvorsprungs (60-360) eine Neigung schräg zu der Steckachse (S, S2) aufweist, insbesondere einen konischen Verlauf, aufweist oder nicht rechtwinkelig schräg zu der Kontaktfläche (50-59) verläuft.

9. Trägeranordnung nach einem der vorhergehenden Ansprüche, **dadurch gekennzeichnet, dass** eine Oberfläche des mindestens einen Steckvorsprungs (60-360) und/oder der mindestens eine Steckaufnahme (70-370) kontinuierlich und ohne Unterbrechung in die danebenliegende Kontaktfläche (50-59) des Bauteils, an dem der Steckvorsprung (60-360) oder die Steckaufnahme (70-370) angeordnet sind, übergeht.

10. Trägeranordnung nach einem der vorhergehenden Ansprüche, **dadurch gekennzeichnet, dass** zwischen einer Wandfläche der mindestens einen Steckaufnahme (70-370) oder des mindestens einen Steckvorsprungs (60-360) und der benachbarten Kontaktfläche (50-59) des die Steckaufnahme (70-370) oder den Steckvorsprung (60-360) aufweisenden Bauteils ein Trennschlitz (68, 78), insbesondere ein Paar Trennschlitze (68, 78) an einander gegenüberliegenden Seiten der Steckaufnahme (70-370) oder entgegengesetzten Seiten des Steckvorsprungs (60-360), vorhanden ist.

11. Trägeranordnung nach einem der vorhergehenden Ansprüche, **dadurch gekennzeichnet, dass** das den mindestens einen Steckvorsprung (60-360) oder die mindestens eine Steckaufnahme (70-370) aufweisende Bauteil ein Blech umfasst, an dem der mindestens eine Steckvorsprung (60-360) und/oder die mindestens eine Steckaufnahme (70-370) anhand eines Umformens, insbesondere eines Prägevorgangs, und/oder eines Ausschneidens ausgebildet ist.

12. Trägeranordnung nach einem der vorhergehenden Ansprüche, **dadurch gekennzeichnet, dass** mindestens eine Widerlagerfläche des mindestens einen Steckvorsprungs (60-360) und/oder der mindestens einen Steckaufnahme (70-370) durch eine Schmalseitenwand eines Wandabschnitts gebildet ist, der durch einen Trennschlitz (68, 78) von einem benachbarten, die Kontaktfläche (50-59) aufweisenden Grundwandabschnitt getrennt ist und/oder eine Widerlagerfläche durch eine Schmalseitenwand eines die Kontaktfläche (50-59) aufweisenden Grundwandabschnitts gebildet ist, von dem der Boden (72-372) der Steckaufnahme (70-370) durch einen Trennschlitz (68, 78) abgetrennt ist.

13. Trägeranordnung nach einem der vorhergehenden Ansprüche, **dadurch gekennzeichnet, dass** an den Kontaktflächen (50-59) der zu verbindenden Bauteile mehrere, insbesondere in einer Reihenanordnung angeordnete, Steckvorsprünge und mehrere, insbesondere in einer Reihenanordnung angeordnete, Steckaufnahmen (70-370) vorgesehen sind und/oder dass die mindestens eine Steckaufnahme (70-370) eine erste Steckaufnahme (70-370) und mindestens eine zweite, in einem Querabstand neben der ersten Steckaufnahme (70-370) angeordnete Steckaufnahme (70-370) umfasst, so dass der mindestens eine Steckvorsprung (60-360) wahlweise in die erste oder mindestens eine zweite Steckaufnahme (70-370) einsteckbar ist und die Bauteile in einem dem Querabstand entsprechenden Rastermaß in unterschiedlichen Querpositionen miteinander verbindbar sind.

14. Trägeranordnung nach einem der vorhergehenden Ansprüche, **dadurch gekennzeichnet, dass** die zu verbindenden Bauteile den Querträger (20-420) und mindestens einen Seitenträger (30-430; 31-431) umfassen, wobei an zueinander winkeligen Wänden des Seitenträgers (30-430; 31-431) und des Querträgers (20-420) jeweils mindestens eine Paarung bestehend aus Steckvorsprung (60-360) und Steckaufnahme (70-370) aufweisen.

15. Trägeranordnung nach einem der vorhergehenden Ansprüche, **dadurch gekennzeichnet, dass** insbesondere vom Kopf des mindestens einen Steckvorsprungs (60-360) ein Hakenvorsprung (69) quer zu der Steckrichtung absteht, der zum Eingriff in eine sich quer zur Steckrichtung erstreckende, insbesondere am Boden (72-372) oder unter dem Boden (72-372) der mindestens einen Steckaufnahme (70-370) vorgesehene, und sich ebenfalls quer zur Steckrichtung erstreckenden Hakenaufnahme vorgesehen ist.

## Claims

1. Support assembly for a trailer coupling or a load carrier, as components including a cross-member (20-420) and where applicable side members (30-430; 31-431) connected to the cross-member (20-420) for fitting to a rear (102) of a vehicle body, together with at least one holder (11, 13, 311) fitted to the cross-member (20-420) for a trailer coupling or for a coupling part of a load carrier, wherein at least two components or component parts of the support assembly (10-410) fit up against one another with contact surfaces (50-59), **characterised in that**, before the contact surface (50-59) of the one component or the one component part there protrudes at least one plug-in projection (60-360) in the form of a plug-in pin, which may be inserted along an insertion axis (S, S2) into at least one plug-in socket (70-370) in the form of a pin holder on the contact surface (50-59) of the other component or component part and engages in the plug-in socket (70-370) so that side thrust bearing surfaces of the plug-in projection (60-360) and the plug-in socket (70-370) extending transversely to the contact surface (50-59) are in engagement.

2. Support assembly according to claim 1, **characterised in that** the plug-in projection or projections (60-360) and the plug-in socket (70-370) holding the plug-in projection (60-360) are joined together through material bonding, in particular by gluing and/or welding and/or clinching and/or with the aid of at least one mechanical interlocking element, in particular a screw or a rivet.

3. Support assembly according to claim 1 or 2, **characterised in that** the plug-in socket or sockets (70-370) has or have a base (72-372) and/or the plug-in projection or projections (60-360) has or have at its or their free end an end face (62-362), and/or there is a gap between side walls of the plug-in projection (60-360) or the plug-in socket (70-370) providing thrust bearing surfaces.

4. Support assembly according to claim 3, **characterised in that** the base (72-372) provides a support surface on which the plug-in projection (60-360) rests with its end face (62-362), and/or an interlocking element, in particular a screw or a rivet, penetrating the base (72-372) of the plug-in socket (70-370) and the frontal end face (62-362) or the head of the plug-in projection (60-360), is provided.

5. Support assembly according to any of the preceding claims, **characterised in that** the plug-in projection or projections (60-360) has or have on the side opposite the free head end a recess, in particular for holding a head of a rivet or a screw.

6. Support assembly according to any of the preceding claims, **characterised in that** the plug-in socket or sockets (70-370) and/or the plug-in projection or projections (60-360) has or have an inner circumferential contour or outer circumferential contour which is cylindrical, in particular circular-cylindrical, or polygonal in cross-section, in particular rectangular, and/or conical.

7. Support assembly according to any of the preceding claims, **characterised in that** an insertion length of the plug-in projection or projections (60-360) and/or the plug-in socket or sockets (70-370) extending in the direction of the insertion axis (S, S2) is less than a diameter of the plug-in projection (60-360) or the plug-in socket (70-370) transversely to the insertion axis (S, S2).

8. Support assembly according to any of the preceding claims, **characterised in that** at least one thrust bearing surface of the plug-in socket or sockets (70-370) and/or the plug-in projection or projections (60-360) is inclined at an angle to the insertion axis (S, S2), in particular with a conical course, or running not perpendicular but at an angle to the contact surface (50-59).

9. Support assembly according to any of the preceding claims, **characterised in that** one surface of the plug-in projection or projections (60-360) and/or the plug-in socket or sockets (70-370) merges continuously and without interruption into the adjacent contact surfaces (50-59) of the component on which the plug-in projection (60-360) or the plug-in socket (70-370) are provided.

10. Support assembly according to any of the preceding claims, **characterised in that**, between the wall of of the plug-in socket or sockets (70-370) or the plug-in projection or projections (60-360) and the adjacent contact surfaces (50-59) of the component which has the plug-in socket (70-370) or the plug-in projection (60-360), there is a separating slit (68, 78), in particular a pair of separating slits (68, 78), on opposite sides of the plug-in socket (70-370) or opposite sides of the plug-in projection (60-360).

11. Support assembly according to any of the preceding claims, **characterised in that** the component with the plug-in projection or projections (60-360) or the plug-in socket or sockets (70-370) comprises a metal sheet on which the plug-in projection or projections (60-360) and/or the plug-in socket or sockets (70-370) are formed by means of reshaping, in particular a stamping process and/or cutting out.

12. Support assembly according to any of the preceding claims, **characterised in that** at least one thrust bearing surface of the plug-in projection or projections (60-360) and/or the plug-in socket or sockets (70-370) is formed by a narrow side wall of a wall section which is separated by a separating slit (68, 78) from an adjacent base wall section which has the contact surface (50-59), and/or a thrust bearing surface is formed by a narrow side wall of a base wall section which has the contact surface (50-59), from which the base (72-372) of the plug-in socket (70-370) is separated by a separating slit (68, 78).

13. Support assembly according to any of the preceding claims, **characterised in that** there are provided on the contact surfaces (50-59) of the components to be connected several plug-in projections, in particular in a row arrangement, and several plug-in sockets (70-370), in particular in a row arrangement, and/or that the plug-in socket or sockets (70-370) include a first plug-in socket (70-370) and at least one second plug-in socket (70-370), located in a lateral space alongside the first plug-in socket (70-370), so that the plug-in projection or projections (60-360) may be inserted either in the first or at least one second plug-in socket (70-370), and the components may be connected to one another in different lateral positions in a grid dimension corresponding to the lateral space.

14. Support assembly according to any of the preceding claims, **characterised in that** the components to be connected include the cross-member (20-420) and at least one side member (30-430; 31-431), wherein walls of the side member (30-430; 31-431) and the cross-member (20-420) at an angle to one another each have a pairing comprised of plug-in projection (60-360) and plug-in socket (70-370).

15. Support assembly according to any of the preceding claims, **characterised in that**, in particular from the head of the plug-in projection or projections (60-360) there extends transversely to the direction of insertion a hook projection (69), which is provided for engagement in a hook socket extending transversely to the direction of insertion, in particular on the base (72-372) or under the base (72-372) of the plug-in socket or sockets (70-370), and likewise extending transversely to the direction of insertion.

## Revendications

1. Agencement de support pour un attelage ou un support de charge, comprenant comme composant une traverse (20-420) et des supports latéraux (30-430 ; 31-431) reliés éventuellement à la traverse (20-420) pour le montage sur une partie arrière (102) d'une carrosserie d'un véhicule ainsi qu'au moins une bride de support (11, 13, 311) agencée sur la traverse (20-420) pour un attelage ou pour une partie d'attelage d'un support de charge, au moins deux composants ou éléments de composant de l'agencement de support (10-410) reposant l'un sur l'autre avec des surfaces de contact (50-59), **caractérisé en ce qu'**au moins une saillie d'enfichage (60-360) configurée sous forme de tenon d'enfichage dépasse de la surface de contact (50-59) d'un composant ou d'un élément de composant, qui peut être enfichée dans au moins un logement d'enfichage (70-370) configuré sous forme de logement de tenon sur la surface de contact (50-59) de l'autre composant ou de l'autre élément de composant le long d'un axe d'enfichage (S, S2) et s'engage dans le logement d'enfichage (70-370) de sorte que des surfaces de contre-palier latérales s'étendant transversalement à la surface de contact (50-59) de la saillie d'enfichage (60-360) et du logement d'enfichage (70-370) soient en engagement.

2. Agencement de support selon la revendication 1, **caractérisé en ce que** l'au moins une saillie d'enfichage (60-360) et le logement d'enfichage (70-370) logeant la saillie d'enfichage (60-360) sont reliés entre eux par liaison de matière, en particulier par collage et/ou soudage et/ou clinchage et/ou à l'aide d'au moins un élément à complémentarité de formes mécanique, en particulier d'une vis ou d'un rivet.

3. Agencement de support selon la revendication 1 ou 2, **caractérisé en ce que** l'au moins un logement d'enfichage (70-370) présente un fond (72-372) et/ou l'au moins une saillie d'enfichage (60-360) présente sur son extrémité libre une paroi avant (62, 362) et/ou une distance est présente entre des parois latérales mettant à disposition des surfaces de contre-palier de la saillie d'enfichage (60-360) ou du logement d'enfichage (70-370).

4. Agencement de support selon la revendication 3, **caractérisé en ce que** le fond (72-372) met à disposition une surface d'appui, contre laquelle la saillie d'enfichage (60-360) s'appuie avec sa paroi avant (62-362) et/ou un élément à complémentarité de formes pénétrant le fond (72-372) du logement d'enfichage (70-370) et la paroi avant frontale (62-362) ou la tête de la saillie d'enfichage (60-360), en particulier une vis ou un rivet est prévu.

5. Agencement de support selon l'une quelconque des revendications précédentes, **caractérisé en ce que** l'au moins une saillie d'enfichage (60-360) présente, sur son côté en regard de son extrémité de tête libre, une cavité, en particulier pour le logement d'une tête d'un rivet ou d'une vis.

6. Agencement de support selon l'une quelconque des revendications précédentes, **caractérisé en ce que** l'au moins un logement d'enfichage (70-370) et/ou l'au moins une saillie d'enfichage (60-360) présente un contour périphérique intérieur ou extérieur cylindrique, en particulier cylindrique et circulaire ou polygonale en section transversale, en particulier rectangulaire et/ou conique.

7. Agencement de support selon l'une quelconque des revendications précédentes, **caractérisé en ce qu'**une longueur d'enfichage s'étendant en direction de l'axe d'enfichage (S, S2) de l'au moins une saillie d'enfichage (60-360) et/ou de l'au moins un logement d'enfichage (70-370) est inférieure à un diamètre s'étendant transversalement à l'axe d'enfichage (S, S2) de la saillie d'enfichage (60-360) ou du logement d'enfichage (70-370).

8. Agencement de support selon l'une quelconque des revendications précédentes, **caractérisé en ce qu'**au moins une surface de contre-palier de l'au moins un logement d'enfichage (70-370) et/ou l'au moins une saillie d'enfichage (60-360), présente une inclinaison oblique par rapport à l'axe d'enfichage (S, S2), en particulier un tracé conique ou ne s'étend pas à angle droit en oblique par rapport à la surface de contact (50-59).

9. Agencement de support selon l'une quelconque des revendications précédentes, **caractérisé en ce qu'**une surface de l'au moins une saillie d'enfichage (60-360) et/ou l'au moins un logement d'enfichage (70-370) passe en continu et sans interruption dans la surface de contact (50-59) se trouvant à côté du composant, sur lequel la saillie d'enfichage (60-360) ou le logement d'enfichage (70-370) est agencé.

10. Agencement de support selon l'une quelconque des revendications précédentes, **caractérisé en ce qu'**une fente de séparation (68, 78), en particulier une paire de fentes de séparation (68, 78) est présente sur des côtés opposés du logement d'enfichage (70-370) ou des côtés opposés de la saillie d'enfichage (60-360) entre une surface de paroi de l'au moins un logement d'enfichage (70-370) ou de l'au moins une saillie d'enfichage (60-360) et de la surface de contact contiguë (50-59) du composant présentant le logement d'enfichage (70-370) ou la saillie d'enfichage (60-360).

11. Agencement de support selon l'une quelconque des revendications précédentes, **caractérisé en ce que** le composant présentant l'au moins une saillie d'enfichage (60-360) ou l'au moins un logement d'enfichage (70-370) comporte une tôle, sur laquelle l'au moins une saillie d'enfichage (60-360) et/ou l'au moins un logement d'enfichage (70-370) est réalisé par formage, en particulier à l'aide d'un processus d'estampage et/ou par découpage.

12. Agencement de support selon l'une quelconque des revendications précédentes, **caractérisé en ce qu'**au moins une surface de contre-palier de l'au moins une saillie d'enfichage (60-360) et/ou de l'au moins un logement d'enfichage (70-370) est formée par une paroi latérale étroite d'une section de paroi qui est séparée par une fente de séparation (68, 78) d'une section de paroi de base présentant la surface de contact (50-59) contiguë et/ou une surface de contre-palier est formée par une paroi latérale étroite d'une section de paroi de base présentant la surface de contact (50-59), de laquelle le fond (72-372) du logement d'enfichage (70-370) est séparé par une fente de séparation (68, 78).

13. Agencement de support selon l'une quelconque des revendications précédentes, **caractérisé en ce que** plusieurs saillies d'enfichage agencées en particulier en rang et plusieurs logements d'enfichage (70-370) agencés en particulier en rang sont prévus sur les surfaces de contact (50-59) des composants à relier et/ou **en ce que** l'au moins un logement d'enfichage (70-370) comporte un premier logement d'enfichage (70-370) et au moins un second logement d'enfichage (70-370) agencé à une distance transversale à côté du premier logement d'enfichage (70-370) de sorte que l'au moins une saillie d'enfichage (60-360) puisse être enfichée au choix dans le premier ou au moins un second logement d'enfichage (70-370) et les composants puissent être reliés entre eux dans une dimension modulaire correspondant à la distance transversale dans différentes positions transversales.

14. Agencement de support selon l'une quelconque des revendications précédentes, **caractérisé en ce que** les composants à relier comportent la traverse (20-420) et au moins un support latéral (30-430 ; 31-431), des parois angulaires l'une par rapport à l'autre du support latéral (30-430 ; 31-431) et de la traverse (20-420) présentant respectivement au moins un appariement constitué d'une saillie d'enfichage (60-360) et d'un logement d'enfichage (70-370).

15. Agencement de support selon l'une quelconque des revendications précédentes, **caractérisé en ce qu'**une saillie de crochet (69) dépasse en particulier de la tête de l'au moins une saillie d'enfichage (60-360) transversalement au sens d'enfichage, laquelle saillie est prévue pour l'engagement dans un logement de crochet s'étendant transversalement au sens d'enfichage, prévu en particulier sur le fond (72-372) ou sous le fond (72-372) de l'au moins un logement d'enfichage (70-370) et s'étendant aussi transversalement au sens d'enfichage.
